**Europäisches Patentamt**

**European Patent Office**

**Office européen des brevets**

(11) Veröffentlichungsnummer : **0 149 055**
**B1**

(12) **EUROPÄISCHE PATENTSCHRIFT**

(45) Veröffentlichungstag der Patentschrift :
15.03.89

(51) Int. Cl.⁴ : **G 09 B 21/00**

(21) Anmeldenummer : **84113985.0**

(22) Anmeldetag : **19.11.84**

(54) Einrichtung zur Erzeugung eines taktilen Zeichenfeldes.

(30) Priorität : **03.01.84 DE 3400094**

(43) Veröffentlichungstag der Anmeldung :
**24.07.85 Patentblatt 85/30**

(45) Bekanntmachung des Hinweises auf die Patenterteilung : **15.03.89 Patentblatt 89/11**

(84) Benannte Vertragsstaaten :
**AT CH DE FR GB LI NL SE**

(56) Entgegenhaltungen :
**DE--A-- 2 501 835**
**FR--A-- 1 242 977**
**GB--A-- 645 363**
**US--A-- 3 624 772**
**IBM TECHNICAL DISCLOSURE BULLETIN, Band 18, Nr. 7, Dezember 1975, Seiten 2294,2295, New York, US; E.G. NASSIMBENE: "Ball and belt loop braille line display"**
**FEINWERKTECHNIK & MESSTECHNIK, Band 90, Nr. 7, Oktober/November 1982, Seiten 341-342, München, DE; L. LIMMER: "Bildschirmtext- und Videotext-Gerät für Blinde"**

(73) Patentinhaber : **Nixdorf Computer Aktiengesellschaft**
**Fürstenallee 7**
**D-4790 Paderborn (DE)**

(72) Erfinder : **Burchart, Joachim**
**Am Fichtenhain 14**
**D-4797 Schlangen 2 (DE)**

(74) Vertreter : **Schaumburg, Thoenes & Englaender**
**Mauerkircherstrasse 31 Postfach 86 07 48**
**D-8000 München 80 (DE)**

## Beschreibung

Die Erfindung betrifft eine Einrichtung gemäß dem Oberbegriff des Anspruches 1.

Derartige Einrichtungen dienen beispielsweise als in einer Blindenschrift beschreibbare und wieder löschbare Lesetafeln. Die einzelnen Zeichenelemente sind im allgemeinen zu Zeichengruppen zusammengefaßt, welche zur Darstellung von Buchstaben, Zahlen oder dergleichen dienen. Mehrere Zeichengruppen ergeben eine Zeile, mehrere Zeilen eine Seite. Kappenartige Noppen aus einem elastischen Material stellen besonders einfache und preiswerte Mittel zur Darstellung taktiler Zeichen dar.

Es ist schon eine Einrichtung der gattungsgemäßen Art bekannt, bei welcher die Noppen mit überall gleicher Materialstärke in ein Band aus einem elastischen Material eingeprägt sind und jeweils auf der einen oder anderen Seite des Bandes in voller Noppenhöhe vorstehende Erhebungen bilden können (US-A-3 624 772). Der jeweilige gesetzte oder gelöschte Zustand der Noppen ist sehr instabil, so daß er verhältnismäßig leicht von dem einen Zustand in den anderen übergeht. Es ist deshalb zu befürchten, daß einerseits die jeweils gelöschten Noppen beim Gleiten des Bandes über die unterhalb des Bandes angeordnete Stützfläche in ihre gesetzte Lage umgestellt werden oder daß andererseits beim Fehlen einer derartigen Stützfläche die gesetzten Noppen durch den Fingerdruck der lesenden Person in ihre gelöschte Lage verstellt werden. Wie aus der US-A-3 624 772 hervorgeht, ist mit der bekannten Einrichtung beabsichtigt, die auf einem Magnetband gespeicherten Informationen laufend auf das als Lesetafel dienende Band zu übernehmen und lesbar zu machen ; die lesende Person tastet die Zeichen bei laufendem Band ab, beispielsweise da, wo dieses auf die Stützplatte aufläuft. Das weitere Schicksal der Noppen nach Passieren der lesenden Hand ist demnach nicht von Bedeutung, so daß es auf eine wirkliche stabile Stellung der Noppen im gesetzten oder gelöschten Zustand nicht ankommt. Soll jedoch eine ganze Zeile oder, bei Verwendung mehrerer Zeilen, eine ganze Seite im beschriebenen Zustand erhalten bleiben, beispielsweise um diese mehrmals zu lesen, dann ist die bekannte Einrichtung nicht brauchbar.

Es ist die Aufgabe der Erfindung, eine Einrichtung der gattungsgemäßen Art zu schaffen, bei der der Zustand der Noppen in ihrer gesetzten oder gelöschten Lage absolut stabil ist, so daß er nicht unbeabsichtigt, sondern nur durch aktive Ansteuerung geändert werden kann. Eine derartige Verbesserung gegenüber der bekannten Einrichtung erlaubt es insbesondere, jeweils eine ganze Zeile bzw. eine ganze Seite vollständig zu beschreiben und zu konservieren, bis sie durch aktive Ansteuerung gelöscht wird, wobei die Gefahr von Fehlinformationen durch unbeabsichtigtes Setzen oder Löschen einzelner Noppen nicht besteht.

Diese Aufgabe ist erfindungsgemäß durch die im Anspruch 1 stehenden Merkmale gelöst. Die erfingungsgemäße Ausbildung verhindert, daß die Noppen umspringen, wenn sie beispielsweise bis in die Tafelebene eingedrückt werden, da dabei der instabile Kippzustand der Noppen nicht erreicht wird. Die Noppen können deshalb weder durch die Stützplatte aus ihrer gelöschten Lage in eine gesetzte Lage, noch durch die Finger der lesenden Person aus ihrer gesetzten Lage in eine gelöschte Lage umgestellt werden. Eine derartige Umstellung ist vielmehr nur mit speziellen Mitteln zum Setzen bzw. Löschen der Noppen möglich.

Die kappenartigen Noppen können demnach zwei äußerst stabile Zustände einnehmen, nämlich die ausgestülpte Lage, bei der sie deutlich aus der Ebene der Lesetafel vorspringen, und eine eingestülpte Lage, in der sie in die Ausnehmungen der Lesetafel zurückgezogen sind, so daß sie vom Lesenden nicht oder aber deutlich als gelöscht wahrgenommen werden. In der gelöschten Lage stehen die Noppen auf der Unterseite des Bandes nicht oder nur geringfügig über, so daß sie z. B. durch eine unter dem Band angeordnete Stützplatte nicht bis in ihren instabilen Kippzustand eingedrückt werden können. Die erfindungsgemäße Ausbildung der Noppen ermöglicht deshalb trotz deren einfachen Aufbaus insbesondere das Schreiben eines ganz dauerhaften Tafelbildes, welches auch nach dem Abtasten durch eine lesende Person mit Sicherheit unverfälscht erhalten geblieben ist.

Es ist bereits durch die DE-A-25 01 835 eine Anzeigetafel bekannt, die aus einer Rahmen- und Gitterstruktur besteht, wobei zwischen den Rahmen- und Gitterstegen Bereiche ausgebildet sind, deren Flächen jeweils in Reihen aneinanderliegende, profilierte Grundringe bilden, wobei die von den Grundringen eingefaßten Bereiche jeweils die Form von in zwei stabile Stellungen stülpbaren Schalen haben. Die ganze Anzeigetafel hat eine äußerst komplizierte Form und dadurch insbesondere eine stark reliefartig gegliederte Oberfläche, so daß die jeweils ausgestülpten Schalen nur mit Schwierigkeiten in der gegliederten Oberflächenstruktur der Anzeigetafel ertastbar sind. Das gilt vor allem dann, wenn die Schalen etwa in der für die Darstellung von Blindenschrift üblichen Größe und Anordnung ausgebildet sein sollen. Die bekannte Anzeigetafel ist deshalb als Lesetafel für Blinde ungeeignet.

Dadurch, daß die Noppen gemäß der Erfindung einfach an der Innenseite der Ausnehmungen der im übrigen nicht reliefartig sondern eben ausgebildeten Tafel angeordnet oder befestigt sind, stehen von der Tafeloberfläche in für Blinde leicht ertastbarer Weise nur noch die gesetzten Noppen vor. Eine derartige einfache Ausbildung der Tafel und der Noppen ist ohne Schwierigkeiten auch in den für die Darstellung von Blindenschrift üblichen Abmessungen herstellbar.

Die Mittel zum Setzen bzw. Löschen der Noppen können durch ganz einfache, senkrecht zur Tafelebene wirkende Stempel oder dergleichen gebildet werden, welche die Zeilenbreite in keiner Weise vergrößern und deshalb einer dichten Belegung der Lesetafel nicht im Wege stehen, wie weiter hinten noch ausgeführt wird. Außerdem brauchen diese Stempel je nach Formgebung der Noppen nur einen relativ geringen Hub zu haben, da bei Erreichen einer bestimmten instabilen Zwischenlage die Noppen von selbst in ihre stabile Endstellung springen.

In weiterer Ausgestaltung ist erfindungsgemäß vorgesehen, daß die Noppen jeweils an der Innenfläche der Ausnehmungen vom oberen Rand dieser Ausnehmungen aus nach innen versetzt angeordnet sind. Es läßt sich zeigen, daß auf diese Weise eine Anordnung gefunden werden kann, bei der es nicht möglich ist, die Noppen mit dem Finger so weit einzudrücken, daß sie in ihre gelöschte Lage springen.

In einer bevorzugten Ausgestaltung der Erfindung sind die Noppen mit der Tafel einstückig ausgebildet. Als Material kommt beispielsweise Gummi, Kunststoff oder dergleichen in Frage.

Da die Noppen ihre stabilen Stellungen vollkommen unabhängig von einer Unterstützung durch die Stempel zum Setzen oder Löschen beibehalten, ist es nicht erforderlich, daß jedem Zeichenelement derartige Stempel fest zugeordnet sind. Es genügt vielmehr, wenn nach einer weiteren Ausgestaltung erfindungsgemäß mehrere Noppen nacheinander jeweils durch einen relativ zur Tafel beweglich angeordneten Stempel setzbar bzw. löschbar sind. Theoretisch genügt ein Stempel zum Setzen sowie ein Stempel zum Löschen, welcher jeweils die ganze Tafel überstreichen kann, wobei entweder der Stempel ortsfest und die Tafel beweglich angeordnet ist oder umgekehrt.

In einer bevorzugten Ausgestaltung der Erfindung ist jedoch beispielsweise unterhalb der Tafel wenigstens eine in Richtung der Noppenspalten ausgerichtete Reihe mit einer der Zeilenzahl entsprechenden, im Zeilenabstand angeordneten Anzahl von Stempeln zum Setzen der Noppen vorgesehen ; durch taktweises Weiterbewegen der Tafel in Zeilenrichtung können nacheinander alle Noppenspalten gesetzt werden, bis die ganze Seite beschrieben ist. Ebenso lassen sich die Stempel auch in Zeilenrichtung anordnen, wobei die Tafel in Spaltenrichtung schrittweise versetzt werden muß. Es können auch mehrere parallele Reihen von Stempeln vorgesehen sein, wobei die Tafel jeweils in Sprüngen von mehreren Zeilenabständen bzw. Spaltenabständen bewegt werden muß usw.

Zum Löschen ist nach einer Ausgestaltung erfindungsgemäß eine relativ zur Tafeloberseite in Zeilenrichtung bzw. in Spaltenrichtung sich abwälzende, mit Vorsprüngen besetzte Löschwalze vorgesehen, wobei die Vorsprünge auf der Abwicklung der Löschwalze entsprechend dem Matrixmuster der Noppen angeordnet sind, wie weiter hinten genauer beschrieben wird.

In einem bevorzugtem Ausführungsbeispiel der Erfindung ist die Tafel als endloses, antreibbares, über Umlenkrollen geführtes Band ausgebildet, welches im Lesebereich über eine feste Stützplatte oder dergleichen geführt ist, wobei die Stempelreihen zum Setzen der Noppen ortsfest angeordnet sind. Dieses Band kann entweder in Zeilenrichtung bewegt werden, wobei vorzugsweise das Band nach Beschreiben einer Seite zum Lesen angehalten wird, es kann jedoch auch in Spaltenrichtung bewegt werden, wobei es fortlaufend neu beschrieben werden und zeilenweise gelesen werden kann. Das Löschen erfolgt automatisch beim Weitertransport des Bandes durch eine gegen das rücklaufende Trum des Bandes anliegende, mit Löschvorsprüngen besetzte Löschwalze. Diese oder auch die Umlenkrollen können antreibbar sein und den Transport des Bandes übernehmen.

Erfindungsgemäß sind nach einer Ausgestaltung die Noppen auf der Tafel bzw. dem Band in einem Braille-Code mit wenigstens einer, vorzugsweise aber mehreren eine Braille-Seite bildenden Braille-Zeilen angeordnet. Um außer den Buchstaben und Zahlen beispielsweise auch graphische Symbole etwa entsprechend der für Videotext- und Bildschirmtext-Wiedergabe entwickelten Art darstellen zu können, ist weiterhin erfindungsgemäß vorgesehen, daß die Noppen in einer dichten Matrix mit gleichmäßigem Zeilen- und Spaltenabstand angeordnet sind, wobei jeweils einzelne Zeichenfelder als Braille-Formen zusammenfaßbar sind, welche jeweils von Abschnitten von einer oder mehreren Noppenzeilen bzw. Noppenspalten umgeben sind. In einer bevorzugten Ausgestaltung der Erfindung ist ein Acht-Punkt-Braille-Code vorgesehen, wobei jede Braille-Form von einem aus zwei Noppenzeilenabschnitten bzw. zwei Noppenspaltenabschnitten gebildeten Noppenrahmen umgeben ist. Die ganze Lesefläche läßt sich demnach in eine der Anzahl der Braille-Formen entsprechende Anzahl von Feldern aufgeteilt denken, die jeweils eine Matrix von vier mal sechs Punkten umfassen. Jedes dieser Felder setzt sich aus einer Acht-Punkt-Braille-Form sowie einem einreihigen Rahmen zusammen, wie weiter hinten genauer erläutert wird. Zwei benachbarte Braille-Formen sind demnach jeweils durch zwei Noppenreihen voneinander getrennt. Bei der Wiedergabe von Schriften und Zahlen werden nur die Braille-Formen gesetzt. Bei der Wiedergabe von graphischen Symbolen kann das gesamte Zeichenfeld verwendet werden.

Die erfindungsgemäße Einrichtung kann vorzugsweise als Wiedergabegerät für Videotext bzw. Bildschirmtext dienen, wobei z. B. eine ganze Bildschirmseite auf die Lesetafel übertragen und bis zum Löschbefehl erhalten werden soll, was wegen der großen Stabilität der Noppen im gesetzten und gelöschten Zustand möglich ist. Um das Tafelbild entsprechend einen Bildschirmbild jeweils « seitenweise » zu schreiben und zu löschen, können unter Verwendung der erfindungsgemäßen Einrichtung die einem ganzen Tafelbild entsprechenden Informationen in eine Speichereinheit übernommen und diese Informationen in einem Zeichengenerator in das Anordnungsschema eines taktilen Zeichenfeldes umgeformt werden, worauf das vom Zeichengenerator gebildete Anordnungsschema auf die Tafel übertragen wird. Die einem Tafelbild entsprechenden Informationen werden vorzugsweise zum Zwecke einer Handhabungsvereinfachung als Ganzes durch jeweils einen Steuerbefehl in die Speichereinheit übernommen, auf die Tafel übertragen und wieder gelöscht.

Weitere Vorteile der Erfindung ergeben sich auch aus der Zeichnung sowie der Zeichnungsbeschreibung. In der Zeichnung sind mehrere Ausführungsbeispiele der Erfindung dargestellt, die im folgenden beschrieben sind. Es zeigen :

Fig. 1 einen Abschnitt einer Lesetafel mit einem Zeichenelement in gesetzter Lage im Längsschnitt,

Fig. 2 jeweils Darstellungen gemäß Fig. 1, wobei bis 4 das Zeichenelement unterschiedliche Lagen einnimmt,

Fig. 5 eine als endloses Band ausgebildete Lesetafel in einer Seitenansicht, wobei das Band in Zeilenrichtung beweglich ist,

Fig. 6 ein Band gemäß Fig. 5 in einer Draufsicht,

Fig. 7 ein in Spaltenrichtung bewegliches Band,

Fig. 8 einen Ausschnitt aus einer Matrix von Zeichenelementen,

Fig. 9 eine Matrix gemäß Fig. 8, aus der die Felder für die Darstellung von Braille-Zeichen erkennbar sind,

Fig. 10 bis 13 verschiedene Darstellungen von graphischen Symbolen auf einem Feld gemäß den Fig. 8 und 9.

Fig. 14 schematisch eine Steuereinrichtung zur Ansteuerung einer Einrichtung für die Erzeugung eines taktilen Zeichenfeldes.

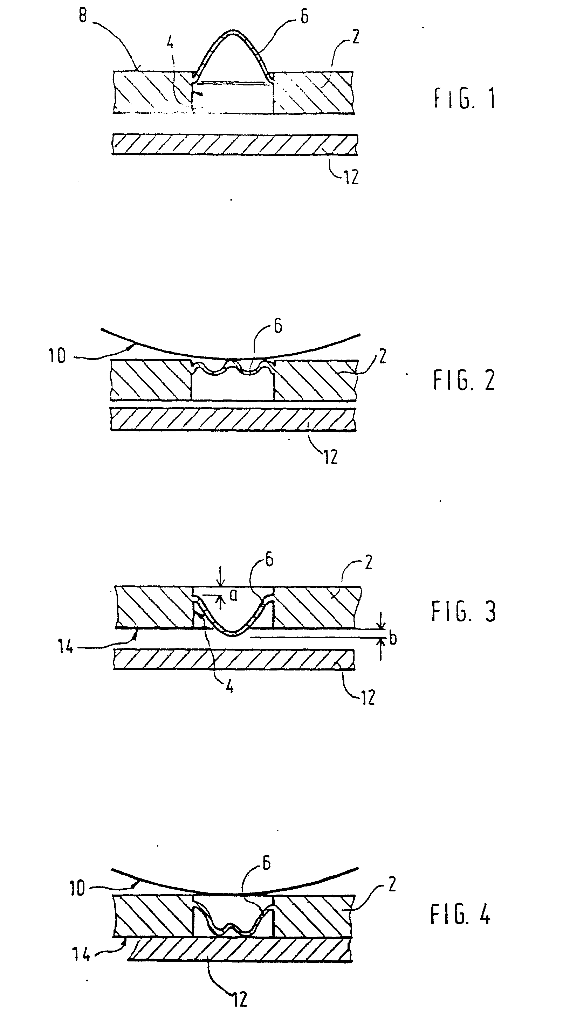

Fig. 1 zeigt einen Abschnitt einer Lesetafel 2, die beispielsweise als allseitig begrenzte Tafel oder auch als endloses Band ausgebildet sein kann. In der Lesetafel 2 sind matrixartig verteilt Ausnehmungen 4 ausgebildet, an deren Innenfläche jeweils kappenförmige Noppen 6 angeordnet sind, die in der dargestellten, gesetzten Lage über die Tafelebene 8 vorspringen. Die Lesetafel 2 und die Noppen 6 sind einstückig aus einem elastischen Material ausgebildet. Die Querschnittsform der Ausnehmungen 4 sowie der Noppen 6 ist vorzugsweise kreisförmig. Wie insbesondere Fig. 3 erkennen läßt, ist der Noppen 6 innerhalb der Ausnehmung 4 vom oberen Rand aus nach unten um einen Betrag a versetzt. Dadurch wird erreicht, daß beim Niederdrücken des gesetzten Noppens durch den Finger 10 der lesenden Person nur ein mittlerer Bereich des Noppens eingedrückt wird, ohne daß der die stabile Lage bestimmende Randbereich umgerichtet wird, wie insbesondere aus Fig. 2 zu erkennen ist. Nach dem Abheben des Fingers 10 vom Noppen 6 stülpt dieser sich wieder in seine stabile gesetzte Lage aus, so daß die durch den Noppen zu vermittelnde Information nicht verlorengeht.

Erst wenn durch Einwirkung eines von oben auf den Noppen wirkenden Stempels dieser soweit eingedrückt wird, daß auch sein Randbereich umgerichtet wird, gelangt er in die in Fig. 3 dargestellte, eingestülpte Lage, die seiner stabilen gelöschten Lage entspricht.

Wenn wie im dargestellten Ausführungsbeispiel die Lesetafel 2 und die Noppen 6 einstückig ausgebildet sind, dann ist auch die Lesetafel elastisch, so daß sie durch die lesende Person nach unten gedrückt wird. Um eine zu große Durchbiegung, welche die Funktionsfähigkeit der Lesetafel beeinträchtigen würde, zu verhindern, ist unterhalb der Lesetafel 2 zumindest im Lesebereich eine feste Stützplatte 12 vorgesehen, auf die sich die Lesetafel 2 auflegen kann, wie die Fig. 2 und 4 zeigen. Damit durch das Aufliegen der Lesetafeln 2 auf der Stützplatte 12 ein über die Unterseite 14 der z. B. aus Gründen einer Materialspannung in ihrer Stärke beschränkten Leseplatte überstehender Noppen nicht in seine gesetzte Lage verstellt wird, darf der Noppen nur um einen solchen Betrag b über die Unterseite 14 vorstehen, daß beim Aufliegen der Lesetafel 2 der Noppen wiederum nur in einem mittleren Bereich verformt wird, ohne daß dessen Randbereich seine den stabilen Zustand des Noppens bestimmende Lage ändert, wie aus Fig. 4 zu erkennen ist.

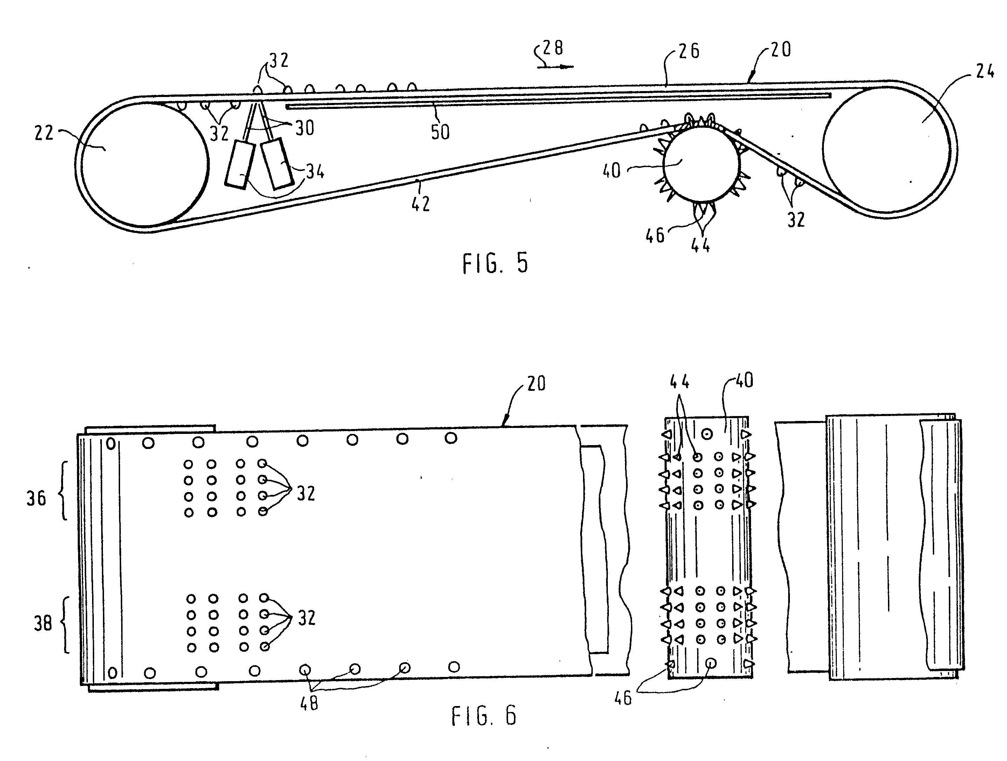

Fig. 5 zeigt eine Einrichtung, bei der die Lesetafel 20 als endloses Band ausgebildet ist, welches über zwei Umlenkrollen 22, 24 läuft. Unterhalb des oberen Trums 26, welches die eigentliche Lesetafel darstellt, ist eine Reihe von Stempeln 30 angeordnet, welche zum Setzen der an dem Band 20 angeordneten Noppen 32 dienen. Die Stempel 30 sind gegen die Unterseite des Trums 26 beispielsweise durch elektromagnetische Antriebe 34 bewegbar. Um die Stempel in einer möglichst dichten Reihe anordnen zu können, sind sie abwechselnd jeweils gegeneinander leicht versetzt und gegeneinander gekippt. Wie Fig. 6 erkennen läßt, sind auf dem Band 20 acht Noppenzeilen in zwei Gruppen zu je vier Noppenzeilen angeordnet. Außerdem sind die Noppen auch spaltenweise zu Gruppen von je zwei Noppenspalten zusammengefaßt. Dadurch ergeben sich jeweils einzelne Zeichenfelder von zwei mal vier Noppen, d. h. also mit einer Anordnung, die dem Acht-Punkt-Braille-Code entspricht. Das in Fig. 6 dargestellte Ausführungsbeispiel weist demnach zwei übereinanderliegende Braille-Zeilen 36, 38 auf. Die Stempel sind entsprechend einer Noppen-Spalte angeordnet, d. h. es sind acht Stempel vorgesehen, welche in zwei Gruppen zu je vier Stempeln zusammengefaßt sind. Um die Lesetafel zu beschreiben, wird sie in Richtung des Pfeiles 28 taktweise an den ortsfest angeordneten Stempeln 30 entlangbewegt, wobei die Stempel bei jedem Takt jeweils eine Spalte schreiben, bis die gesamte, aus zwei Braille-Zeilen 36, 38 bestehende Seite beschrieben ist. Sodann kann diese Seite gelesen werden.

Zum Löschen der Lesetafel ist eine Löschwalze 40 vorgesehen, welche nach Art einer Spannwalze gegen das rücklaufende Trum 42 des Bandes 20 anliegt. Die Löschwalze 40 ist in bekannter und deshalb nicht näher dargestellter Weise antreibbar, so daß das Band 20 mit seinem oberen Trum 26 beispielsweise in Richtung des Pfeiles 28 weiterbewegt werden kann. Die Löschwalze 40 ist entsprechend dem Matrixmuster der Noppen 32 mit Vorsprüngen 44 besetzt, wie insbesondere aus Fig. 6 erkennbar ist. Wenn das Trum 42 die Löschwalze 40 passiert, werden auf diese Weise alle Noppen 32 in ihre gelöschte Lage eingestülpt. Um eine exakte Synchronisierung zwischen der Löschwalze 40 und dem Band 20 zu gewährleisten, ist die Löschwalze 40 mit Transportdornen 46 versehen, welche in eine entsprechende Randlochung 48 des Bandes 20 eingreifen. Die Randlochung 48 kann außerdem durch Lichtschranken oder dgl. abgetastet werden und zur zeitrichtigen Ansteuerung der Stempel 30 verwendet werden. Die Noppen dürfen in ihrer gelöschten Stellung nur soweit über die Unterseite des Bandes 20 vorstehen, daß sie weder durch die Umlenkrolle 22 noch durch die im Lesebereich unterhalb des Trums 26 angeordnete Stützplatte 50 in ihre gesetzte Stellung bewegt werden.

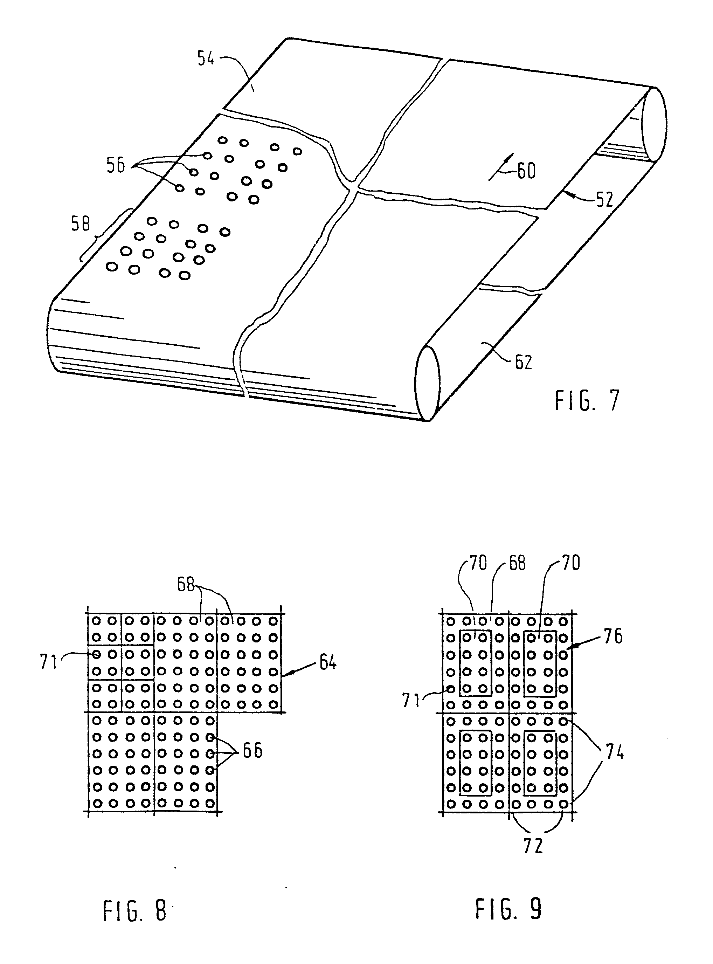

Fig. 7 zeigt ebenfalls eine als Band ausgebildete Lesetafel 52, welche im Unterschied zu der in den Fig. 5 und 6 dargestellten Lesetafel jedoch nicht in Zeilenrichtung, sondern in Spaltenrichtung bewegt wird. Unterhalb des oberen Trums 54 sind entsprechend dem in Fig. 6 dargestellten Ausführungsbeispiel wiederum Stempel zum Setzen der Noppen 56 vorgesehen, wie nicht näher erläutert zu werden braucht. Diese Stempel sind in einer Reihe angeordnet, welche in Richtung einer Noppenzeile ausgerichtet ist, entsprechend dem Abstand und der Anordnung der Noppen. Auf diese Weise können beim taktweisen Weitertransport des Bandes 52 nacheinander alle Noppenzeilen beschrieben werden. Nach je vier Transporttakten ist eine Braille-Zeile 58 fertiggeschrieben. Bei dieser Anordnung kann im Gegensatz zur Anordnung gemäß den Fig. 5 und 6 die Lesetafel zeilenweise beschrieben und sogleich gelesen werden, ohne daß zunächst die ganze Seite beschrieben werden muß.

Die Transportrichtung des als Lesetafel dienenden Bandes 52 ist vorzugsweise so, daß sich das obere Trum 54 in Richtung des Pfeiles 60 bewegt, so daß in einer für ein ermüdungsfreies Lesen günstigen Weise jeweils die dem Lesenden zunächst gelegene Zeile 58 beschrieben wird. Die beschriebenen Zeilen bleiben lesbar, bis sie nach oben aus dem Lesebereich herauswandern und sodann durch eine entsprechend der Anordnung gemäß Fig. 5 gegen das untere Trum 62 anliegende Löschwalze gelöscht werden.

Auf den Sichtgeräten von Computern werden häufig die neuen Informationen jeweils in die oberste Bildschirmzeile geschrieben ; der schon geschriebene Text wandert nach unten aus dem Sichtbereich. Will man diese Darstellungsweise auf eine Lesetafel für Blinde übertragen, dann muß der Riementransport von oben nach unten erfolgen, d. h. entgegengesetzt zur Richtung des Pfeiles 60.

Fig. 8 zeigt einen Ausschnitt aus einer Lesetafel 64, bei welcher die Noppen 66 in einer dichten Matrix mit gleichmäßigem Zeilen- und Spaltenabstand angeordnet sind. Diese Anordnung ist vor allem für die Wiedergabe von Videotext- bzw. Bildschirmtextdarstellunge geeignet, welche Schrift- und Buchstabenzeichen sowie graphische Muster enthalten. Die gesamte Matrix kann man sich in Felder 68 zu je vier mal sechs Noppen aufgeteilt denken, wie in Fig. 8 dargestellt. Zur Darstellung von Buchstaben und Zahlen im Braille-Code wird aus jedem Feld 68 nur das innere Zeichenfeld 70 verwendet, welches in der üblichen Weise zwei mal vier Noppen enthält, wie Fig. 9 zeigt. Jedes der Zeichenfelder 70, welches einem Braille-Zeichen entspricht, ist jeweils von Abschnitten 72 bzw. 74 einer Noppenzeile bzw. einer Noppenspalte umgeben, die einen Noppenrahmen 76 bilden. Die Zeichenfelder 70 haben damit voneinander jeweils einen Abstand von zwei Noppenreihen, so daß die einzelnen Braille-Zeichen deutlich voneinander getrennt sind.

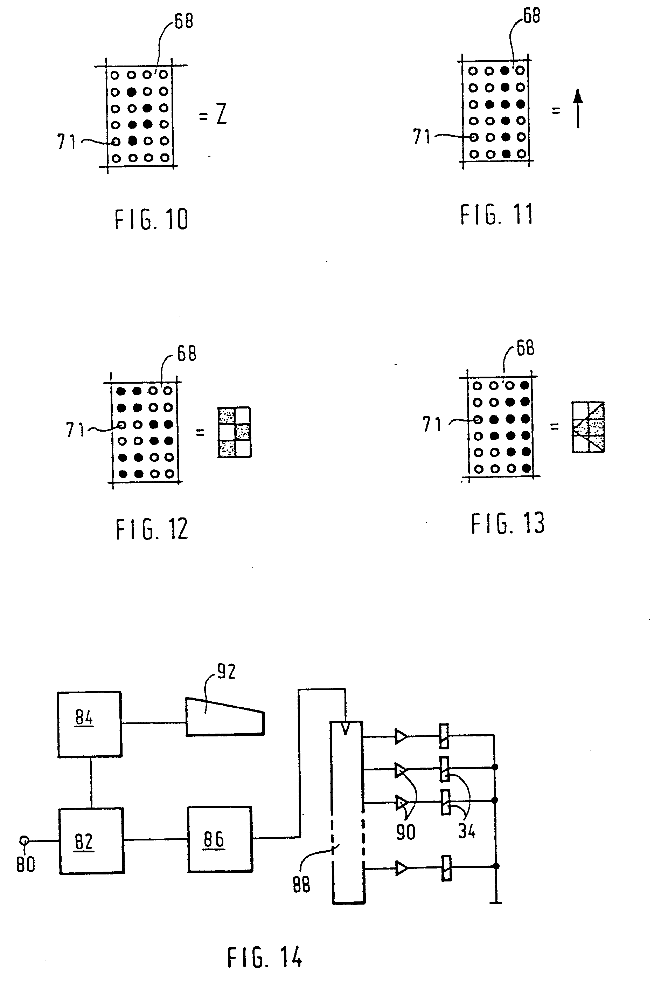

Fig. 10 zeigt den Großbuchstaben Z in Brailleschrift,

Fig. 11 ein stilisiertes Pfeilsymbol.

Die Fig. 12 und 13 zeigen beispielsweise verschiedene graphische Symbole einer Videotextdarstellung sowie deren Darstellung mit Hilfe eines Vier-mal-Sechs-Noppenfeldes. Dabei entsprechen die schwarzen Punkte beispielsweise jeweils gesetzten Noppen. Durch eine Erweiterung der Felder, d. h. durch eine Erhöhung der Punkte pro graphischem Zeichen kann die Auflösung verbessert werden ; eine ungerade Zeilen- und Spaltenzahl läßt einen symmetrischen Zeichenaufbau bei schrägen Linien zu (vgl. dazu Fig. 13). Großflächige graphische Muster können durch Einbeziehung der Noppen mehrerer Felder 68 verwirklicht werden.

Fig. 14 zeigt schematisch eine Steuereinrichtung zur Ansteuerung einer Lesetafel der vorne beschriebenen Art. Sie dient insbesondere zum Übertragen der Informationen einer Bildschirmseite oder dgl. auf ein taktiles Zeichenfeld. Für Videotext- und Bildschirmtextwiedergabe ist der Bildschirm in 24 Zeilen zu je 40 Zeichen aufgeteilt. Die in diesen Zeichen enthaltenen Informationen werden über den Eingang 80 unter der Kontrolle eines Mikroprozessors 84 einem Seitenspeicher 82 zugeleitet. Nach Abschluß dieser Eingabe ist die gesamte Bildschirmseite im Seitenspeicher 82 geladen. Die dementsprechenden Informationssignale werden in einem Zeichengenerator 86 in die entsprechende Zeichenanordnung des taktilen Zeichenfeldes umgewandelt. Der Zeichengenerator 86 gibt die Signale, die beispielsweise Zeichen für Zeichen und Zeile für Zeile in den Seitenspeicher 82 geladen wurden, nach Noppenzeilen oder Noppenspalten geordnet in ein Schieberegister 88 ; bei einer Anordnung gemäß Fig. 6 werden beispielsweise die einzelnen Noppenspalten nacheinander gesetzt, während bei einer Anordnung gemäß Fig. 7 die Noppenzeilen jeweils Zeile für Zeile gesetzt werden, wie bereits beschrieben wurde. Das erfolgt in der Weise, daß nach dem Laden des Schieberegisters über Verstärker 90 die zeilenweise bzw. spaltenweise angeordneten Antriebe 34 (siehe Fig. 5) der Stempel entsprechend dem im Zeichengenerator 86 erzeugten Code angesteuert werden. Nach dem Setzen einer Zeile oder Spalte wird das Band einen Schritt weiterbewegt und die nächste Zeile bzw. Spalte gesetzt. Auf diese Weise wird durch zeilen- oder spaltenweises Fortschalten schrittweise die ganze Seite geschrieben.

Am Mikroprozessor 84 ist eine Steuertastatur 92 angeschlossen. Mit dieser können Steuerbefehle beispielsweise für die Übernahme einer Bildschirmseite in die Speichereinheit, zur Übertragung des Speicherinhaltes auf die Lesetafel, zum Löschen der Lesetafel, zur vergrößerten Ausgabe eines Bildteils oder zur Ausgabe einer neuen Bildschirmseite in die Einrichtung eingegeben werden.

**Patentansprüche**

1. Einrichtung zur Erzeugung eines taktilen Zeichenfeldes mit mehreren matrixartig auf einer Tafel angeordneten kappenartigen Noppen aus einem elastischen Material, welche wahlweise in eine aus einer ebenen Lesefläche vorspringende, gesetzte Stellung und eine eingestülpte, gelöschte Stellung einstellbar sind, sowie mit in Ausstülprichtung und/oder in Einstülprichtung auf die Noppen wirkenden Stempeln zum Setzen und/oder zum Löschen der Noppen, dadurch gekennzeichnet, daß die Noppen (6, 32, 56) jeweils in der Tafel (2, 20, 52) ausgebildete, diese durchdringende Ausnehmungen (4) überspannen, die eine für eine wenigstens teilweise Aufnahme der Noppen (6, 32, 56) in ihrer gelöschten Stellung ausreichende Tiefe haben und die mit der Tafeloberseite etwa rechtwinkelige Kanten bilden, wobei die Noppen (6) jeweils an der Innenseite der Ausnehmungen (4) und von dem oberen Rand derselben nach innen versetzt angeordnet sind.

2. Einrichtung nach Anspruch 1, dadurch gekennzeichnet, daß die Noppen (6) mit der Tafel (2) einstückig ausgebildet sind.

3. Einrichtung nach einem der Ansprüche 1 und 2, dadurch gekennzeichnet, daß die Mittel zum Setzen der Noppen (32) wenigstens einen in Setzrichtung gegen die Tafel (2) bewegbaren, relativ zur Lesefläche und parallel zu dieser versetzbaren Setzstempel (30) umfassen.

4. Einrichtung nach einem der Ansprüche 1 bis 3, dadurch gekennzeichnet, daß die Mittel zum Setzen der Noppen (32) wenigstens eine in Richtung der Noppenspalten oder eine in Richtung der Noppenreihen ausgerichtete Reihe mit einer der Zeilenzahl entsprechenden, im Zeilenabstand angeordneten bzw. einer der Spaltenzahl entsprechenden, im Spaltenabstand angeordneten Anzahl von Setzstempeln (30) umfassen, welche relativ zur Tafel jeweils in Zeilen- bzw. Spaltenrichtung versetzbar sind.

5. Einrichtung nach einem der Ansprüche 1 bis 4, dadurch gekennzeichnet, daß die Mittel zum Löschen der Noppen (32) eine auf der Tafel (20) in Zeilenrichtung bzw. Spaltenrichtung sich abwälzende, mit entsprechend dem Matrixmuster der Noppen angeordneten Löschvorsprüngen (44) besetzte Löschwalze (40) umfassen.

6. Einrichtung nach einem der Ansprüche 4 oder 5, dadurch gekennzeichnet, daß die Tafel (20, 52) als endloses, über Umlenkrollen (22, 24) geführtes antreibbares Band ausgebildet ist, welches im Lesebereich über eine feste Stützplatte (50) geführt ist, wobei die Stempelreihen ortsfest angeordnet sind.

7. Einrichtung nach einem der Ansprüche 5 oder 6, dadurch gekennzeichnet, daß die Löschwalze (40) als gegen das rücklaufende Trum des Bandes anliegende ortsfeste Spannwalze ausgebildet ist.

8. Einrichtung nach einem der Ansprüche 1 bis 7, dadurch gekennzeichnet, daß die Noppen (32, 56) in einem Braille-Code mit wenigstens einer oder auch mehreren eine Braille-Seite bildenden Braille-Zeichen angeordnet sind.

9. Einrichtung nach einem der Ansprüche 1 bis 8, dadurch gekennzeichnet, daß die Zeichenelemente (71) in einer dichten Matrix mit gleichmäßigem Zeilen- und Spaltenabstand angeordnet sind, wobei jeweils einzelne Zeichenfelder (70) als Braille-Zeichen zusammenfaßbar sind, welche jeweils von wenigstens einer Reihe von Zeichenelementen allseitig umgeben sind.

10. Einrichtung nach Anspruch 9, dadurch gekennzeichnet, daß für jedes Braille-Zeichen eine 8-Punkt Braille-Form vorgesehen ist und daß jede Brailleform von einer Reihe von Zeichenelementen allseitig umgeben ist.

11. Einrichtung nach einem der Ansprüche 4 sowie 8 bis 10, dadurch gekennzeichnet, daß dieser eine Steuereinrichtung mit einer Speichereinheit (82) zum Speichern wenigstens der einem Tafelbild entsprechenden Informationen, einem Zeichengenerator (86) zum Umformen dieser Informationen in die Anordnung eines taktilen Zeichenfeldes sowie Mitteln (88, 90) zum spaltenweisen bzw. zeilenweisen Setzen der Zeichenelemente des Zeichenfeldes zugeordnet ist.

12. Einrichtung nach Anspruch 11, dadurch gekennzeichnet, daß eine Steuertastatur (92) zum Eingeben von Steuerbefehlen für die Übernahme wenigstens der einem Tafelbild entsprechenden Informationen in die Speichereinheit und/oder zur Übertragung dieser Informationen auf die Tafel, sowie zum Löschen der Tafel vorgesehen ist.

**Claims**

1. Apparatus for generating a field of tactile characters with a plurality of cap-like knubs of elastic material and arranged matrix-like on a table, which are selectively movable into a set position projecting out of a plane table and into a retracted cleared position, as well as with pistons for setting and/or clearing the knubs and acting on the knubs in the projecting and/or the retracting direction, characterized in that the knubs (6, 32, 56) are respectively arranged over recesses (4) formed in the table (2, 20, 52) and penetrating through this, which have a depth sufficient for at least partly receiving the knubs (6, 32, 56) in their retracted position and which approximately form rectangular edges with the table top side, wherein the knubs (6) are respectively arranged on the inner surface of the recesses (4) and are arranged displaced downward from the upper edge of these recesses.

2. Apparatus according to claim 1, characterized in that the knubs (6) are made integral with the table (2).

3. Apparatus according to one of claims 1 and 2, characterized in that the means for setting the knubs (32) comprise at least one piston (30) arranged movably in setting direction with respect to the table (2) and displacable relative and in parallel to the reading plane.

4. Apparatus according to one of claims 1 to 3, characterized in that the means for setting the knubs (32) comprise at least a row of pistons (30) aligned in direction of the knub columns or in direction of the knub lines with a number of pistons corresponding to the line number and arranged in the line spacing or corresponding to the column number and arranged in the column spacing, which are movable relative to the table in the line direction or in the column direction, respectively.

5. Apparatus according to one of claims 1 to 4, characterized in that the means for clearing the knubs (32) comprise a clearing roller (40) rolling along the table (20) in line direction or in column direction and equipped with clearing projections (44) arranged according to the matrix pattern of the knubs.

6. Apparatus according to one of claims 4 or 5, characterized in that the table (20, 52) is made in the form of an endless drivable belt guided over deflector rollers (22, 24), which is guided over a solid backing plate (50) in the reading area, wherein the piston rows are arranged stationary.

7. Apparatus according to one of claims 5 or 6, characterized in that the clearing roller (40) is made in the form of a stationary tension roller lying against the return strand of the belt.

8. Apparatus according to one of claims 1 to 7, characterized in that the knubs (32, 56) are arranged in a Braille code with at least one or even a plurality of Braille characters forming a Braille page.

9. Apparatus according to one of claims 1 to 8, characterized in that the character elements (71) are arranged in a dense matrix with a uniform line and column spacing, wherein respectively individual character fields (70) can be combined as Braille characters which are respectively surrounded on all sides by at least one row of character elements.

10. Apparatus according to claim 9, characterized in that an 8-point Braille form is provided for each Braille character and that each Braille form is surrounded on all sides by one row of character elements.

11. Apparatus according to one of the claims 4 and 8 to 10, characterized in that there is provided a control unit with a memory unit (82) for storing the information corresponding to at least one table picture, a character generator (86) for converting this information into the arrangement of a tactile character field, and means (88, 90) for setting the character elements of the character field by columns or lines.

12. Apparatus according to claim 11, characterized in that a control keyboard (92) is provided for the input of control commands for transferring at least the information corresponding to one table picture to the memory unit and/or for transferring this information to the table as well as for clearing the table.

**Revendications**

1. Dispositif pour la production d'un champ de signes tactiles avec plusieurs protubérances en matière élastique analogues à des capuchons disposées en matrice sur un panneau, qui sont réglables à volonté entre une position posée en saillie sur une surface plane de lecture et une position effacée rentrée, ainsi qu'avec des poinçons agissant sur les protubérances dans le sens de la sortie et/ou dans le sens de la rentrée pour poser et/ou effacer les protubérances, caractérisé en ce que les protubérances (6, 32, 56) couvrent chacune respectivement des évidements (4) formés dans le panneau (2, 20, 52), traversant ce dernier, qui ont une profondeur suffisante pour la réception au moins partielle des protubérances (6, 32, 56) à leur position effacée et qui forment avec la face supérieure du panneau des bords sensiblement orthogonaux, dans lequel les protubérances (6) sont réunies chacune à la face intérieure des évidements (4) respectifs et déportées vers l'intérieur par rapport au bord supérieur de ces derniers.

2. Dispositif selon la revendication 1, caractérisé en ce que les protubérances (6) sont réalisées d'un seul tenant avec le panneau (2).

3. Dispositif selon l'une des revendications 1 et 2, caractérisé en ce que les moyens pour la pose des protubérances (32) comprennent au moins un poinçon de pose (30) déplaçable dans le sens de la pose par rapport au panneau (2), pouvant être déporté relativement à la surface de lecture et parallèlement à celle-ci.

4. Dispositif selon l'une des revendications 1 à 3, caractérisé en ce que les moyens pour la pose des protubérances (32) comprennent au moins une rangée orientée en direction des colonnes de protubérances ou une rangée orientée en direction des lignes de protubérances, avec un nombre de poinçons de pose (30) correspondant au nombre de lignes disposés à distance des lignes ou correspondant au nombre de colonnes disposés à distance des colonnes, qui peuvent être déportés chacun respectivement par rapport au panneau dans la direction des lignes ou des colonnes.

5. Dispositif selon l'une des revendications 1 à 4, caractérisé en ce que les moyens pour effacer les protubérances (32) comprennent un rouleau d'effacement (40) roulant sur le panneau (20) dans la direction des lignes ou des colonnes, avec des saillies d'effacement (44) disposées en correspondance avec la configuration matricielle des protubérances.

6. Dispositif selon la revendication 4 ou 5, caractérisé en ce que le panneau (20, 52) est réalisé comme une bande sans fin entraînable passant autour de poulies de renvoi (22, 24), qui est soutenue dans la zone de lecture par une plaque d'appui fixe (50), les rangées de poinçons étant disposées à des positions fixes.

7. Dispositif selon la revendication 5 ou 6, caractérisé en ce que le rouleau d'effacement (40) est réalisé comme un rouleau de tension à position fixe mis en contact avec le brin de retour de la bande.

8. Dispositif selon l'une des revendications 1 à 7, caractérisé en ce que les protubérances (32, 56) sont disposées selon le code Braille avec au moins un ou même plusieurs caractères Braille composant une page Braille.

9. Dispositif selon l'une des revendications 1 à 8 caractérisé en ce que les éléments de signe (71) sont disposés en une matrice dense avec des intervalles égaux entre les lignes et les colonnes, dans lequel les différents champs de signes (70) peuvent être réunis en caractères Braille qui sont entourés chacun de tous côtés par au moins une rangée d'éléments de signe.

10. Dispositif selon la revendication 9, caractérisé en ce qu'il est prévu pour chaque caractère Braille une forme Braille à 8 points, et en ce que chaque forme Braille est entourée de tous côtés par une rangée d'éléments de signe.

11. Dispositif selon l'une des revendications 4 et 8 à 10, caractérisé en ce qu'il lui est associé un dispositif de commande avec une unité de mémoire (82) pour mémoriser au moins les informations correspondant à un tableau, un générateur de caractères (86) pour transformer ces informations en champ de signes tactiles, ainsi que des moyens (88, 90) pour poser en colonnes ou en lignes les éléments de signe du champ de signes.

12. Dispositif selon la revendication 11, caractérisé en ce qu'un clavier de commande (92) est prévu pour l'introduction d'instructions de commande pour le transfert dans l'unité de mémoire au moins des informations correspondant à un tableau et/ou pour le report de ces informations sur le panneau, ainsi que pour l'effacement du panneau.

FIG. 1

FIG. 2

FIG. 3

FIG. 4

FIG. 5

FIG. 6

EP 0 149 055 B1

FIG. 7

FIG. 8

FIG. 9

3

FIG. 10

FIG. 11

FIG. 12

FIG. 13

FIG. 14

4